# EUROPEAN PATENT SPECIFICATION

(11) **EP 0 679 564 B1**
(45) Date of publication and mention of the grant of the patent: **07.01.1999**
(21) Application number: 95104260.5
(22) Date of filing: 23.03.1995
(51) Int. Cl.: B62D 21/15, B62D 65/00, B60K 5/10

(54) **A motor vehicle structure and a method for assembling a vehicle having this structure**
Kraftfahrzeugstruktur und Verfahren zur Herstellung eines Fahrzeuges mit dieser Struktur
Structure de véhicule automobile et méthode pour l'assemblage d'un véhicule avec une telle structure

(30) Priority: 27.04.1994 IT TO940336
(43) Date of publication of application: 02.11.1995
(73) Proprietor: FIAT AUTO S.p.A., 10135 Torino (IT)
(72) Inventor: Cornacchia, Giorgio, I-10141 Torino (IT)
(74) Representative: Quinterno, Giuseppe

(56) References cited:
- EP-A- 0 274 993
- EP-A- 0 304 366
- EP-A- 0 311 466
- EP-A- 0 437 780
- BE-A- 387 805
- FR-A- 2 181 044
- FR-A- 2 614 257
- US-A- 3 044 822

## Description

The present invention relates to a motor vehicle structure of the load-bearing body type.

More specifically, the invention relates to a motor vehicle structure of the kind defined in the preamble of Claim 1.

EP-A-0 274 993 discloses a motor vehicle structure of this type, with a front portion including two upper longitudinal beam members and two lower attachments. The drive unit and associated functional devices are all preassembled with a front frame structure which is subsequently connected to said upper longitudinal beam members and to the lower attachments.

EP-A-0 146 716 discloses a motor vehicle structure including a plurality of profiled members of extruded light metal connected to node members made of cast light metal. The front portion of the vehicle structure includes two lower longitudinal profiled members to which various devices and assemblies are attached, such as supports for the engine block and the front wheel housings. Said front portion also includes two upper longitudinal profiled members which are essentially parallel to said lower profiled members and are intended for the attachment of the mudguards.

EP-A-0 311 466 discloses a motor vehicle structure including a front cradle frame to which the propulsion unit and all related functional devices are pre-attached so as to allow the operation thereof to be tested before said cradle frame is assembled to the vehicle's bodywork. The arrangement is such that the front cradle frame and the devices fixed thereto can be assembled to the vehicle's bodywork by a first relative translational displacement in a direction parallel to the axis of the steering column, followed by a second relative translational movement in the vertical direction.

It is an object of the invention to provide an improved motor-vehicle structure of the afore-mentioned type.

This and other objects are achieved according to the invention by the motor vehicle structure defined in Claim 1.

The invention also relates to a method for assembling a motor vehicle having a structure of the type defined above, the main features of this method being defined in Claim 10.

The vehicle structure and assembly method of the invention offer numerous advantages.

The front load-bearing structure ensures a high degree of safety in the event of a head-on collision or an off-centre collision, owing to the fact that it is constructed with longitudinal members which are at least in part collapsible and essentially straight, that is without noticeable curves where, as a consequence of the collision, localised "hinging" could occur.

In a head-on or almost head-on collision, the lower longitudinal members partly absorb the impact shock and partly transmit it to the floor of the body.

The structure of the invention is also particularly strong and safe should it receive a side impact, that is in the case of an impact against a side of the structure.

The longitudinal members of the front structure may be fitted (that is connected) to the more rigid areas of the vehicle framework, without the need for tortuous connections and avoiding the potential creation of localised constrictions without resorting to fitting local reinforcement elements which would unavoidably increase the weight of the structure.

The assembly of the drive unit, in particular, by insertion through the open front of the front load-bearing structure avoids the use of lower support frames or cross members such as those necessitated by conventional assembly techniques in which the propulsion unit is fitted into the front compartment of the vehicle vertically from beneath. This enables both weight and cost to be reduced, this latter as far as both equipment and labour time are concerned.

A further advantage of the present invention consists in the possibility of preassembling in a group or unit various driving-control members and devices, such as the steering rod, brake, accelerator and clutch controls in one unit or assembly, with the possibility in particular of preassembling this unit at a workbench. In particular, the devices and members of this unit may be preassembled on a plate or other support structure intended to be fixed in a front aperture or seat in a front wall (for example the so-called fire wall) of the passenger compartment, using for this plate or support structure materials with sound-proofing coatings or sandwich structures which include interposed sound-proofing materials or, in general, materials other than steel which would not be suitable if this support plate or structure were to be welded to the structure of the passenger compartment. The sound-proofing of the passenger compartment is further enhanced by a reduction in the number of holes or apertures in the front wall of the passenger compartment for the insertion and mounting of functional members and devices.

An additional, considerable advantage is provided by the possibility of mounting the various preassembled functional units by insertion and positioning in succession through the front of the front load-bearing structure of the vehicle and by the fact that making connections is made much easier. The fitting of seal assemblies is also made more accurate.

There are similar, considerable advantages from the point of view of after-sale servicing, that is when it is necessary to gain access to devices or members mounted in the front portion of the vehicle for maintenance, repair or replacement. In this case, when necessary, it is possible to remove the front frame and possibly one or more of the preassembled functional units in order to gain easier access to the devices or members to be worked on. In particular, access and working operations may be carried out without needing to lift the vehicle or place it on a ramp.

Further characteristics and advantages of the present invention will become apparent from the detailed description given hereafter with reference to the appended drawings, provided purely by way of non-limitative example, in which:
Figure 1 is an exploded perspective view of part of a motor vehicle having the front load-bearing structure of the invention;
Figure 2 is a side view of the front load-bearing structure of Figure 1;
Figure 3 is a partially sectioned side view showing the front part of the motor vehicle of Figure 1 in its assembled condition;
Figure 4 is an exploded perspective view of a variant of the front part of the motor vehicle shown in Figure 1;
Figure 5 is a partially sectioned side view showing the structure of Figure 4 in its assembled condition; and
Figure 6 is a partially sectioned front view of a motor vehicle having the front structure shown in Figures 4 and 5.

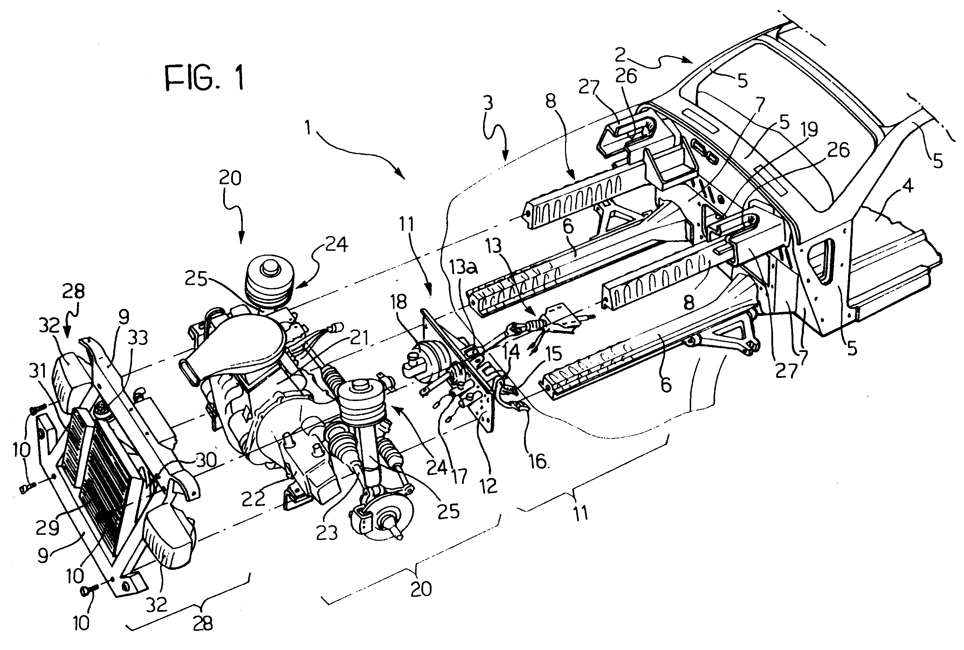

In Figure 1, the structure of a motor vehicle is generally indicated 1 and includes an intermediate or rear portion 2 and an adjacent front portion 3.

The intermediate or rear portion 2 includes a platform or floor 4 to which the load-bearing framework 5 of the passenger compartment is fixed.

The front portion 3 of the structure of the motor vehicle includes two essentially coplanar, parallel lower longitudinal beams or members 6 which are cantilevered on the rear or intermediate portion 2 of the vehicle structure, substantially at the level of the floor 4. These longitudinal beams or members 6 may have their rear ends fixed to the fire wall 7 of the passenger compartment, as shown in the drawings, or may be constituted by extensions of the longitudinal members of the platform of floor 4, or of the lower beams extending under the doors, or they may be fixed to said lower beams and/or to the tunnel.

Two upper longitudinal beams or members 8 are also substantially coplanar and parallel to the lower longitudinal members 6 with which they define overall an open-fronted load-bearing structure. The upper longitudinal beams or members 8 are also rigidly fixed to the load-bearing structure 2 of the passenger compartment.

The front load-bearing structure also includes a front frame 9 releasably fixed to the free ends of the longitudinal beams or members 6 and 8, for example by bolts 10.

The longitudinal beams or members 6 and 8 are at least in part of the type which are axially collapsible in the event of a collision, that is of the type known as "energy-absorbing". Conveniently, the free end portions in particular of the longitudinal beams or members are axially collapsible, as illustrated with portions like accordions in the drawings.

The front load-bearing structure formed by the longitudinal beams or members 6 and 8 and by the front frame 9 supports various functional devices and members of the vehicle.

It is convenient, though not essential, that these devices and members are preassembled in a plurality of assemblies or units which may be inserted in succession through the open front of the structure formed by the longitudinal members 6 and 8 and may be arranged in their assembly positions by essentially translational movements in a direction parallel to these longitudinal beams or members before the front frame 9 is fitted.

According to the embodiment illustrated by way of example in Figure 1, a first preassembled assembly or unit 11 includes a support structure 12, for example a plate, to which driving control members and devices are connected, such as the steering rod 13 (and associated accessories such as the steering lock), the accelerator, brake and clutch pedals, indicated 14 to 16, and related accessories such as the main braking cylinder 17 and any power-assisted system 18 for the brakes, etc...

The functional assembly or unit described above is connected to the fire wall 7 of the passenger compartment, for example at an aperture 19 in this bulkhead. The unit may be anchored with screws, for example, or by other known arrangements.

A second preassembled functional unit, indicated 20 in Figure 1, includes the internal combustion engine 21 and associated drive-transmission devices and members, such as the gearbox 22 and the control members thereof (levers, tie rods etc.), half shafts 23, suspension members and devices 24 with their associated shock absorbers 25, as well as accessories such as the electric generator, the air intake filter, the intake and exhaust ducts, etc...

The preassembled unit 20 is also inserted through the open front of the structure formed by the longitudinal members 6 and 8. It may be moved into its planned assembly position by using the lower longitudinal members 6, for example, as guide runners. Before the unit 20 is fixed in its planned assembly position, all mechanical, fluid and electrical connections are carried out to the devices of the previously mounted unit 11.

The unit 20 may be fixed to the lower longitudinal members with the usual interposed vibration-damping supports.

The upper ends of the shock absorbers 25 (of the functional unit 20) can be fitted from the front into profiled cavities 26 in support elements 27 which are securely fixed to the structure of the motor vehicle. In the embodiment illustrated, these support elements are box-shaped and are securely fixed to the bulkhead of the passenger compartment. Alternatively, the upper ends of the shock absorbers 25 may be anchored in apertures arranged in differently-shaped support elements, for example dome-shaped, securely fixed to the intermediate or rear portion 2 or to the front portion 3 of the structure of the motor vehicle, in a known arrangement.

As shown in Figure 1, a third preassembled unit 28 conveniently includes the front frame 9 onto which the radiator 29 of the cooling circuit of the engine 21 and associated electric fan equipment, generally indicated 30, are preassembled.

The front functional unit 28 may also include any other heat exchangers such as the radiator for cooling the engine-lubricating oil, indicated 31 in Figure 1, front lighting assemblies 32, the horn 33 and the like, all pre-mounted on the front frame 9. In the case of a vehicle with a turbo-engine with intercooler, the radiator of the intercooler circuit may also conveniently be pre-assembled on the front frame 9. The front functional unit 28 may also include the condenser of any air-conditioning system for the vehicle, the evaporator thereof being conveniently pre-mounted in the functional unit 11.

Once the various functional units have been mounted, the front structure of the motor vehicle is finished with body panels and the usual lid for the front compartment, in known arrangements which are not shown in detail in the drawings.

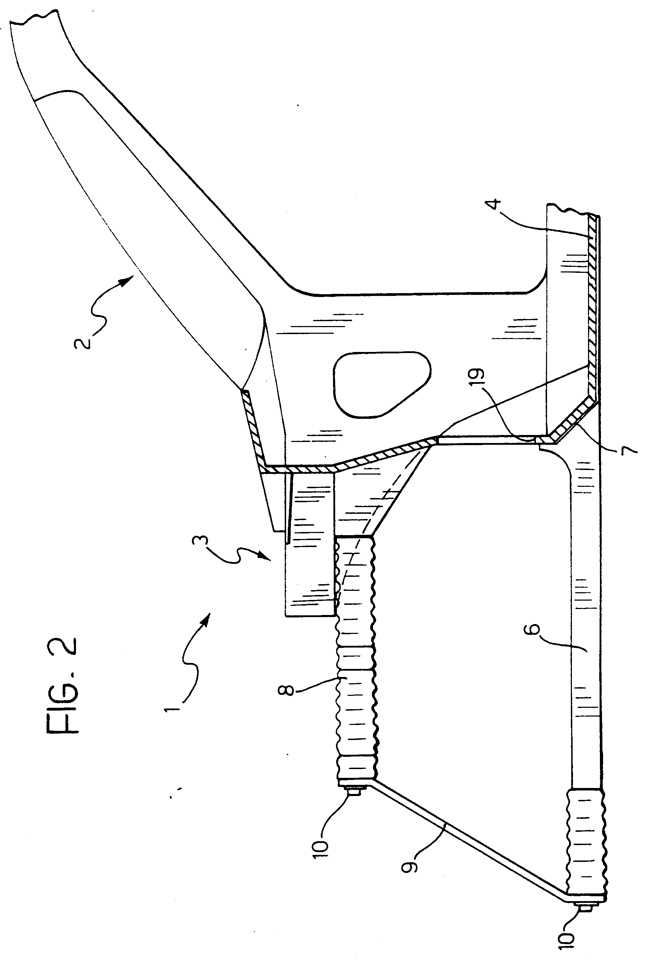

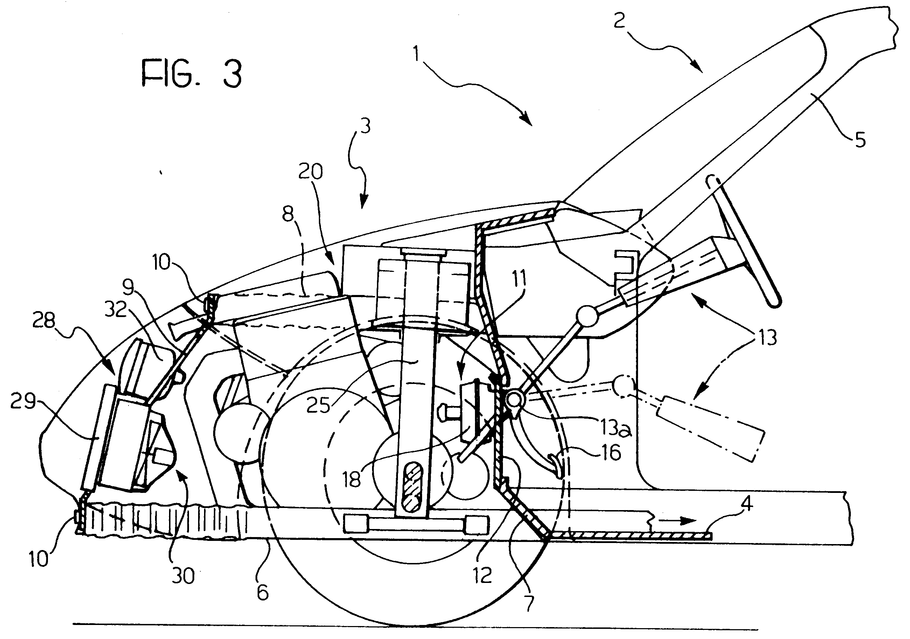

With reference to the functional unit 11, the steering rod may conveniently have a hinge or pivot, indicated 13a in Figures 1 to 3, to enable this steering rod to be lowered for fitting in the passenger compartment and then to be raised and fixed in its normal position for use, as illustrated schematically in Figure 3.

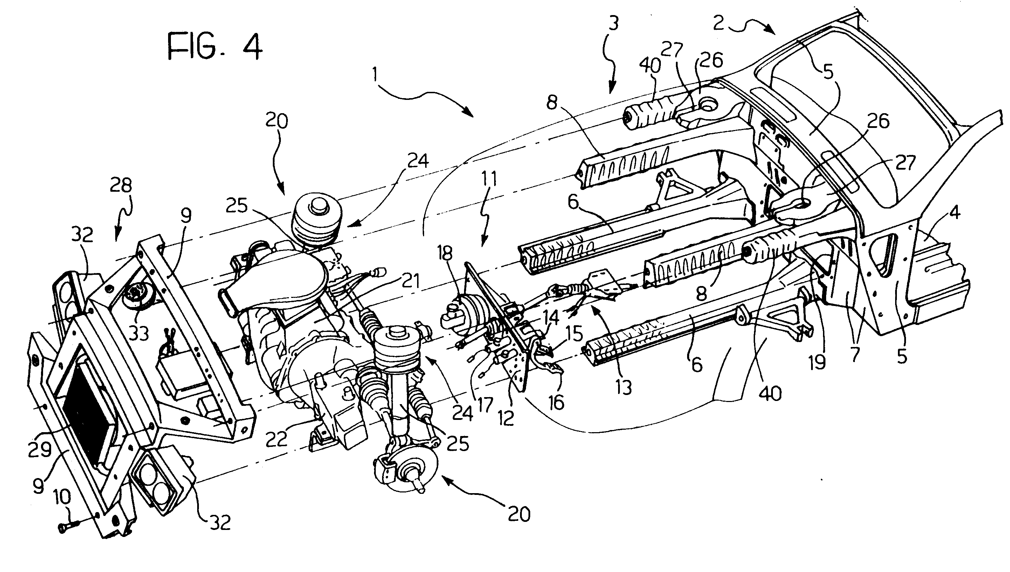

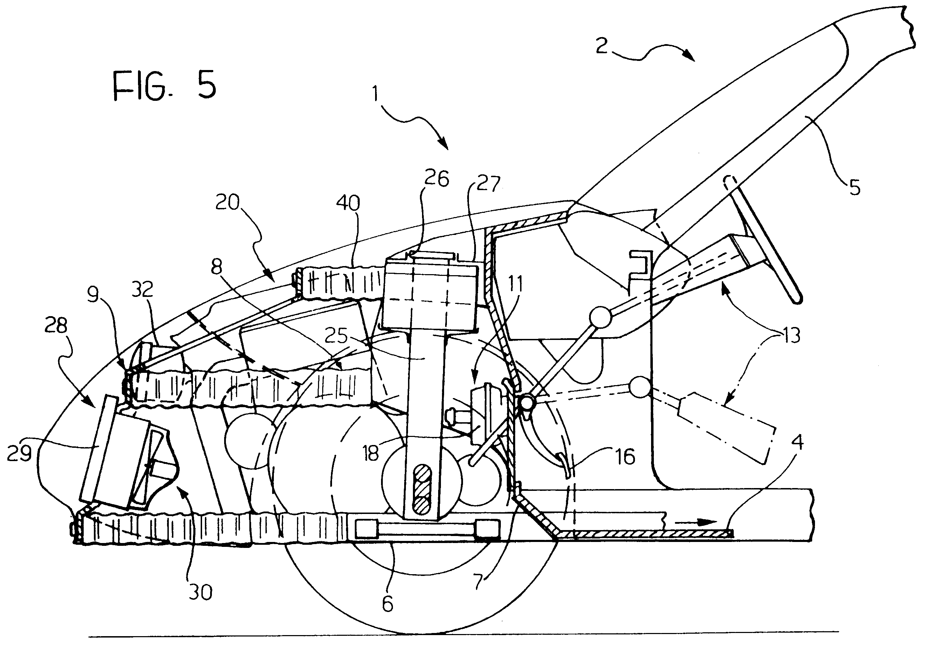

Figures 4 to 6 show a variant of the structure described above. In these drawings, parts and elements described previously are indicated by the same reference numbers.

The structure of Figures 4 to 6 essentially differs from that described previously in that the front load-bearing structure includes, as well as the lower longitudinal members 6, two pairs of upper longitudinal beams or members, indicated 8 and 40 respectively. These pairs of longitudinal members are cantilevered on the structure of the passenger compartment at different levels above the lower longitudinal beams or members 6.

Together the longitudinal members 6, 8 and 40 form an open-fronted load-bearing structure which enables the various preassembled functional assemblies or units to be inserted and arranged in succession from the front, essentially in the manner described above.

In the variant of Figures 4 to 6, the front frame 9 is conveniently constructed so as to be releasably fixed to the free ends of the longitudinal members 6, 8 and 40. Alternatively, this front frame may be fixed to only some of these longitudinal members, or may be replaced by two separate frames.

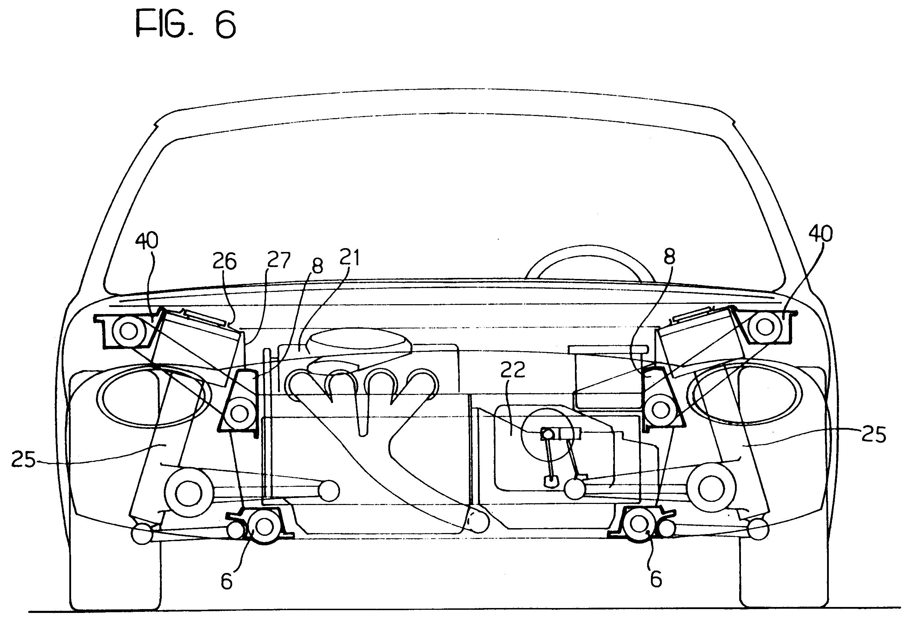

In the arrangement illustrated, as seen in particular in Figure 6, the upper ends of the shock absorbers 25 are fitted into the front load-bearing structure from the front, between the longitudinal members 8 and 40 so as to engage and be fixed in corresponding apertures 26 in support elements 27.

The arrangements described above by way of example offer the aforementioned advantages in terms of safety, simplicity and economical and fast assembly as well as removal and accessibility for after-sale service and maintenance.

Naturally, the principles of the invention remaining unchanged, embodiments and manufacturing details may be widely varied from those described and illustrated purely by way of non-limitative example, without departing from the scope of the invention as defined in the appended Claims.

Thus, for example, the distribution of functional devices and members among the preassembled units may differ from that suggested above as an example. In addition, two or more of these units may be preassembled and pre-connected to each other before being inserted in and fixed in the front load-bearing structure of the motor vehicle.

## Claims

1. A motor vehicle structure, including
an intermediate or rear portion (2) including a platform or floor (4) to which a load-bearing framework (5) of the passenger compartment is fixed, and
an adjacent front portion (3) including a plurality of load-bearing beams (6, 8, 40) which are rigidly fixed to the intermediate or rear portion (2) and to which the drive unit (20) and associated functional devices or assemblies (11, 28) are fixed,
said front portion (3) including
two lower, essentially coplanar, parallel members (6) which are cantilevered on the intermediate or rear portion (2) substantially at the level of the floor (4),
at least two upper parallel longitudinal members (8, 40), also substantially coplanar, which with the lower members (6) define an open-fronted load-bearing structure; and
at least one front frame (9) which is releasably connected to the free ends of the said lower and upper members (6, 8, 40) and adapted to support further devices and assemblies (29-32) of the vehicle fixed thereto, whereby the drive unit (20) and said associated functional devices or assemblies (11, 28) are adapted to be connected to said load-bearing structure (6, 8, 40) from the front and arranged in their respective working positions by an essentially translational movement in a direction parallel to the upper longitudinal members (6, 40);
characterised in that said lower members (6) are elongate longitudinally projecting beams (6) essentially parallel to the upper members (8, 40), and the drive unit (20) and the associated functional devices or assemblies (11) are grouped as a plurality of distinct preassembled units (11, 20) insertable and translatable in succession in said load-bearing structure (6, 8, 40) before said front frame (9) with the further devices or assemblies (29, 32) fixed thereto is connected to said longitudinal members (6, 8, 40).

2. A structure according to Claim 1, characterised in that the front portion includes first and second pairs of upper longitudinal members (8, 40) which are cantilevered at different levels above the lower longitudinal beams or members (6).

3. A structure according to Claim 1 or Claim 2, characterised in that the lower longitudinal beams or members (6) and the upper beams (8, 40) are at least in part axially collapsible.

4. A structure according to either Claim 2 or Claim 3, characterised in that the front frame (9) is releasably connected to the free ends of the lower longitudinal beams or members (6) and to the free ends of at least one pair of upper beams (8, 40).

5. A structure according to either Claim 2 or Claim 3, characterised in that it includes first and second front frames, upper and lower respectively, which are releasably connected to the free ends of the longitudinal members (6, 8, 40).

6. A structure according to any one of the preceding Claims, characterised in that the lower longitudinal beams or members (6) are able to serve as guides for sliding the drive unit (20) into its planned assembly position.

7. A structure according to any one of the preceding Claims, in which the front suspension units (24) of the vehicle include respective shock absorbers (25) the upper ends of which are anchored in apertures (26) formed in support elements or domes (27) securely fixed to the intermediate portion (2) or the front portion (3) of the structure; and in which these apertures (26) are cavities open to the free ends of the longitudinal members (6, 8, 40) and are intended to enable the upper ends of the shock absorbers (25) to be inserted therein and slid into their assembly positions.

8. A structure according to any one of the preceding Claims, characterised in that the following are mounted in succession in the front portion (3)
a first preassembled unit (11) including driving-control members and devices (13 to 18), such as the steering rod (13) and the brake, accelerator and clutch pedals (14 to 16);
a second preassembled unit (20) including the propulsion unit (21) and its associated drive-transmission members and devices (22), such as the gearbox (22) and suspension members and devices (24, 25); and
a third preassembled unit (28) including at least the radiator (29) of the cooling circuit of the propulsion unit (21) and associated electrical ventilation devices (30) as well as any other heat exchangers (31) and possibly the front light assemblies (32) of the vehicle.

9. A structure according to Claim 8, characterised in that the members and devices of the third unit (28) are preassembled by being fitted to the front frame (9).

10. An assembly method for a motor vehicle having a structure (1) according to one or more of the preceding Claims,
characterised in that
functional members and devices to be mounted in the front portion (3) of the structure (1) are preassembled in a plurality of assemblies or units (11, 20, 28) having dimensions which enable them to be inserted through the open front of this front portion (3) of the structure;
these assemblies or units (11, 20, 28) are then inserted and arranged in succession in their respective predetermined assembly positions in the front portion (3) of the structure by essentially translational movements in a direction substantially parallel to the longitudinal beams or members (6, 8, 40) and are then fixed in their positions after any connections have been made; and
the front portion (3) of the structure (1) is then completed by the releasable fixing of the front frame (9) to the free ends of the longitudinal beams or members (6, 8, 40).

11. A method according to Claim 10, characterised in that the following are mounted in succession in the front portion (3) of the structure (1)
a first preassembled unit (11) including driving-control members and devices (13 to 18) such as the steering rod (13) and the brake, accelerator and clutch pedals (14 to 16);
a second preassembled unit (20) including the propulsion unit (21) and associated drive-transmission members and devices (22) such as the gearbox (22) and suspension members and devices (24, 25); and
a third preassembled unit (28) including at least the radiator (29) of the cooling circuit of the propulsion unit (21) and its associated electrical ventilation devices (30) as well as any other heat exchangers (31) and possibly the front light assemblies (32) of the vehicle.

## Patentansprüche

1. Kraftfahrzeugaufbau, wobei der Aufbau aufweist:
einen Zwischenteil oder hinteren Teil (2), der eine Plattform oder Boden (4) aufweist, an dem ein tragender Rahmen (5) des Fahrgastraums befestigt ist, und
einen benachbarten vorderen Teil (3), der eine Vielzahl von Trägern (6, 8, 40) aufweist, die am Zwischenteil oder hinteren Teil (2) starr befestigt sind und an denen die Antriebseinheit (20) sowie zugeordnete funktionelle Vorrichtungen oder Baugruppen (11, 28) befestigt sind,
wobei der vordere Teil (3) aufweist:
zwei untere, im wesentlichen koplanare, parallele Elemente (6), die am Zwischenteil oder hinteren Teil (2) im wesentlichen auf der Höhe des Bodens (4) freitragend vorgebaut sind,
zumindest zwei obere, parallele Längselemente (8, 40), die gleichfalls im wesentlichen koplanar angeordnet sind und mit denen die unteren Elemente (6) einen vorne offenen tragenden Aufbau bilden; und
zumindest einen vorderen Rahmen (9), der mit den freien Enden der unteren und oberen Elemente (6, 8, 40) abnehmbar verbunden und so ausgebildet ist, um weitere Vorrichtungen und Baugruppen (29-32) des Fahrzeugs zu tragen, an dem er angebracht ist, wobei die Antriebseinheit (20) sowie die zugeordneten funktionellen Vorrichtungen oder Baugruppen (11, 28) so ausgebildet sind, dass sie von vorne mit dem tragenden Aufbau (6, 8, 40) verbunden und in ihren entsprechenden Betriebsstellungen durch eine Verschiebung parallel zu den oberen Längselementen (6, 40) angeordnet werden können;
dadurch gekennzeichnet, dass die unteren Elemente (6) längliche, in Längsrichtung vorspringende Träger (6) sind, die im wesentlichen parallel zu den oberen Elementen (8, 40) verlaufen, wobei die Antriebseinheit (20) und die zugeordneten funktionellen Vorrichtungen oder Baugruppen (11) zu einer Vielzahl von getrennten vormontierten Einheiten (11, 20) gruppiert sind, die nacheinander in den tragenden Aufbau (6, 8, 40) eingesetzt und verschoben werden können, bevor der vordere Rahmen (9) mit den weiteren Vorrichtungen oder Baugruppen (29, 32), die an ihm befestigt sind, mit den Längselementen (6, 8,40) verbunden wird.

2. Aufbau gemäß Anspruch 1, dadurch gekennzeichnet, dass der vordere Teil ein erstes und zweites Paar von oberen Längselementen (8, 40) aufweist, die in verschiedenen Höhen über den unteren Längsträgern oder Längselementen (6) freitragend vorgebaut sind.

3. Aufbau gemäß Anspruch 1 oder 2, dadurch gekennzeichnet, dass die unteren Längsträger oder Längselemente (6) sowie die oberen Träger (8, 40) zumindest teilweise axial faltbar sind.

4. Aufbau gemäß Anspruch 2 oder 3, dadurch gekennzeichnet, dass der vordere Rahmen (9) mit den freien Enden der unteren Längsträger oder Längselemente (6) sowie mit den freien Enden des zumindest einen Paars von oberen Trägern (8, 40) abnehmbar verbunden ist.

5. Aufbau gemäß Anspruch 2 oder 3, dadurch gekennzeichnet, dass der Aufbau weiters einen ersten und zweiten vorderen Rahmen, d.h. einen oberen bzw. unteren Rahmen, aufweist, die mit den freien Enden der Längselemente (6, 8, 40) abnehmbar verbunden sind.

6. Aufbau gemäß irgendeinem der bisherigen Ansprüche, dadurch gekennzeichnet, dass die unteren Längsträger oder Längselemente (6) dazu vorgesehen sind, um als Führungen zu dienen, wenn die Antriebseinheit (20) in ihre vorgesehene Montagestellung verschoben wird.

7. Aufbau gemäß irgendeinem der bisherigen Ansprüche, wobei die vorderen Aufhängungen (24) des Fahrzeugs entsprechende Stoßdämpfer (25) aufweisen, deren obere Enden in Öffnungen (26) verankert sind, die in Tragelementen oder Kuppeln (27) ausgebildet sind, die am Zwischenteil (2) oder am vorderen Teil (3) des Aufbaus sicher befestigt sind; und wobei diese Öffnungen (26) aus Hohlräumen bestehen, die sich zu den freien Enden der Längselemente (6, 8, 40) öffnen und dazu vorgesehen sind, damit die oberen Enden der Stoßdämpfer (25) eingesetzt und in ihre Montagestellungen verschoben werden können.

8. Aufbau gemäß irgendeinem der bisherigen Ansprüche, dadurch gekennzeichnet, dass folgende Einheiten nacheinander im vorderen Teil (3) montiert werden:
eine erste vormontierte Einheit (11), die zum Fahren dienende Steuerelemente und Vorrichtungen (13 bis 18) aufweist, beispielsweise die Lenksäule (13) sowie das Bremspedal, das Gaspedal und das Kupplungspedal (14 bis 16);
eine zweite vormontierte Einheit (20), die das Triebwerk (21) mit seinen zugeordneten Elementen und Vorrichtungen für die Kraftübertragung (22) aufweist, beispielsweise das Getriebe (22), sowie die Elemente und Vorrichtungen für die Aufhängung (24, 25); und
eine dritte vormontierte Einheit (28), die zumindest den Kühler (29) des Kühlsystems für das Triebwerk (21) und das zugeordnete elektrische Gebläse (30) sowie weitere Wärmetauscher (31) und möglicherweise die vordere Beleuchtung (32) des Fahrzeugs aufweist.

9. Aufbau gemäß Anspruch 8, dadurch gekennzeichnet, dass die Elemente und Vorrichtungen der dritten Einheit (28) dadurch vormontiert werden, dass sie am vorderen Rahmen (9) befestigt werden.

10. Montageverfahren für ein Kraftfahrzeug, das einen Aufbau (1) gemäß einem oder mehreren der bisherigen Ansprüche besitzt,
dadurch gekennzeichnet, dass
Funktionselemente und funktionelle Vorrichtungen, die im vorderen Teil (3) des Aufbaus (1) montiert werden sollen, zu einer Vielzahl von Baugruppen oder Einheiten (11, 20, 28) vormontiert sind, die Abmessungen besitzen, mit denen es möglich ist, sie durch die offene Stirnseite dieses vorderen Teils (3) des Aufbaus einzusetzen;
worauf diese Baugruppen oder Einheiten (11, 20, 28) nacheinander eingesetzt und in ihren vorgesehenen Montagestellungen im vorderen Teil (3) des Aufbaus im wesentlichen durch eine Verschiebung angeordnet werden, die im wesentlichen parallel zu den Längsträgern oder Längselementen (6, 8, 40) verläuft, worauf sie in ihren Stellungen befestigt werden, nachdem alle Anschlüsse ausgeführt wurden; und
worauf der vordere Teil (3) des Aufbaus (1) dadurch fertiggestellt wird, dass der vordere Rahmen (9) an den freien Enden der Längsträger oder Längselemente (6, 8, 40) abnehmbar befestigt wird.

11. Verfahren gemäß Anspruch 10, dadurch gekennzeichnet, dass folgende Einheiten nacheinander im vorderen Teil (3) des Aufbaus (1) montiert werden:
eine erste vormontierte Einheit (11), die zum Fahren dienende Steuerelemente und Vorrichtungen (13 bis 18) aufweist, beispielsweise die Lenksäule (13) sowie das Bremspedal, das Gaspedal und das Kupplungspedal (14 bis 16);
eine zweite vormontierte Einheit (20), die das Triebwerk (21) mit seinen zugeordneten Elementen und Vorrichtungen für die Kraftübertragung (22) aufweist, beispielsweise das Getriebe (22), sowie die Elemente und Vorrichtungen für die Aufhängung (24, 25); und
eine dritte vormontierte Einheit (28), die zumindest den Kühler (29) des Kühlsystems für das Triebwerk (21) und das zugeordnete elektrische Gebläse (30) sowie weitere Wärmetauscher (31) und möglicherweise die vordere Beleuchtung (32) des Fahrzeugs aufweist.

## Revendications

1. Structure de véhicule à moteur, comprenant:
une partie intermédiaire ou arrière (2) comportant une plate-forme ou un plancher (4) auquel est fixée une ossature porteuse (5) du compartiment des passagers, et
une partie adjacente avant (3) comprenant plusieurs poutres porteuses (6, 8, 40) fixées rigidement à la partie intermédiaire ou arrière (2) et auxquelles sont fixés l'unité motrice (20) et des ensembles ou dispositifs fonctionnels associés (11, 28),
la partie avant (3) comprenant:
deux organes parallèles inférieurs essentiellement coplanaires (6) montés en porte-à-faux sur la partie intermédiaire ou arrière (2) pratiquement au niveau du plancher (4),
au moins deux longerons parallèles supérieurs (8, 40) oui sont aussi pratiquement coplanaires et oui délimitent, avec les organes inférieurs (6), une structure porteuse dont l'avant est ouvert, et
au moins un châssis avant (9) oui est raccordé de façon amovible aux extrémités libres des organes inférieurs et longerons supérieurs (6, 8, 40) et destiné à supporter d'autres dispositifs et ensembles (29-32) du véhicule qui leur sont fixés, si bien que l'unité motrice (20) et les ensembles ou dispositifs fonctionnels associés (11, 28) sont destinés à être raccordés à la structure porteuse (6, 8, 40) par l'avant et sont disposés en positions respectives de fonctionnement par un mouvement essentiellement de translation en direction parallèle aux longerons supérieurs (6, 40),
caractérisée en ce que les organes inférieurs (6) sont des longerons allongés (6) essentiellement parallèles aux organes supérieurs (8, 40), et l'unité motrice (20) et les ensembles ou dispositifs fonctionnels associés (11) sont regroupés sous forme de plusieurs unités distinctes préalablement assemblées (11, 20) qui peuvent être introduites et déplacées en translation successivement dans la structure porteuse (6, 8, 40) avant que le châssis avant (9) auquel sont fixés les ensembles ou dispositifs supplémentaires (29, 32) soit raccordé aux longerons (6, 8, 40).

2. Structure selon la revendication 1, caractérisée en ce que la partie avant comporte une première et une seconde paire de longerons supérieurs (8, 40) montés en porte-à-faux à des niveaux différents des organes ou longerons inférieurs (6).

3. Structure selon la revendication 1 ou 2, caractérisé en ce que les organes ou longerons inférieurs (6) et les poutres supérieures (8, 40) peuvent au moins partiellement s'écraser en direction axiale.

4. Structure selon la revendication 2 ou 3, caractérisée en ce que le châssis avant (9) est raccordé de façon amovible aux extrémités libres des organes ou longerons inférieurs (6) et aux extrémités libres d'au moins une paire de poutres supérieures (8, 40).

5. Structure selon la revendication 2 ou 3, caractérisée en ce qu'elle comprend un premier et un second châssis avant, supérieur et inférieur respectivement, qui sont raccordés de façon amovible aux extrémités libres des longerons (6, 8, 40).

6. Structure selon l'une quelconque des revendications précédentes, caractérisée en ce que les organes ou longerons inférieurs (6) peuvent être utilisés comme guide pour le coulissement de l'unité motrice (20) en position prévue d'assemblage.

7. Structure selon l'une quelconque des revendications précédentes, dans laquelle les unités de suspension avant (24) du véhicule comprennent des amortisseurs respectifs (25) dont les extrémités supérieures sont fixées dans des orifices (26) formés dans des dômes ou éléments de support (27) fixés à la partie intermédiaire (2) ou à la partie avant (3) de la structure, et dans laquelle les orifices (26) sont des cavités qui débouchent aux extrémités libres des longerons (6, 8, 40) et sont destinés à permettre l'insertion des extrémités supérieures des amortisseurs (25) et leur glissement vers leur position d'assemblage.

8. Structure selon l'une quelconque des revendications précédentes, caractérisée en ce que les éléments suivants sont montés successivement dans la partie avant (3):
une première unité préalablement assemblée (11) qui comprend des dispositifs et organes de commande d'entraînement (13 à 18) tels que la barre de direction (13) et les pédales de frein, d'accélérateur et d'embrayage (14 à 16),
une seconde unité préalablement assemblée (20) qui comprend l'unité de propulsion (21) et les dispositifs et organes associés de transmission et d'entraînement (22) tels que la boîte de vitesses (22) et les dispositifs et organes de suspension (24, 25), et
une troisième unité préalablement assemblée (28) qui comprend au moins le radiateur (29) du circuit de refroidissement de l'unité de propulsion (21) et les dispositifs électriques associés (30) de ventilation ainsi que d'autres échangeurs de chaleur éventuels (31) et éventuellement des ensembles ayant les phares avant (32) du véhicule.

9. Structure selon la revendication 8, caractérisée en ce que les dispositifs et organes de la troisième unité (28) sont préalablement assemblés par montage sur le châssis avant (9).

10. Procédé d'assemblage d'un véhicule à moteur ayant une structure (1) selon une ou plusieurs des revendications précédentes,
caractérisé en ce que:
des dispositifs et organes fonctionnels destinés à être montés dans la partie avant (3) de la structure (1) sont préalablement assemblés sous forme de plusieurs ensembles ou unités (11, 20, 28) ayant des dimensions qui permettent leur insertion par la partie avant ouverte de cette partie avant (3) de la structure,
ces ensembles ou unités (11, 20, 28) sont alors insérés et disposés successivement dans leurs positions respectives prédéterminées d'assemblage dans la partie avant (3) de la structure essentiellement par des mouvements de translation en direction pratiquement parallèle aux organes ou longerons (6, 8, 40) et sont alors fixés en position après que des raccords ont été réalisés, et
la partie avant (3) de la structure (1) est alors terminée par fixation amovible du châssis avant (9) aux extrémités libres des organes ou longerons (6, 8, 40).

11. Procédé selon la revendication 10, caractérisé en ce que les éléments suivants sont montés successivement dans la partie avant (3) de la structure (1):
une première unité préalablement assemblée (11) comprenant des dispositifs et organes de commande d'entraînement (13 à 18) tels que la barre de direction (13) et les pédales de frein, d'accélérateur et d'embrayage (14 à 16),
une seconde unité préalablement assemblée (20) comprenant l'unité de propulsion (21) et des dispositifs et organes associés (22) de transmission et d'entraînement tels que la boîte de vitesses (22) et les dispositifs et organes de suspension (24, 25), et
une troisième unité préalablement assemblée (28) qui comporte au moins le radiateur (29) du circuit de refroidissement de l'unité de propulsion (21) et des dispositifs électriques associés (30) de ventilation ainsi que d'autres échangeurs de chaleur éventuels (31) et éventuellement les ensembles à phares avant (32) du véhicule.
